Europäisches Patentamt

European Patent Office

Office européen des brevets

(19)

(11) Veröffentlichungsnummer: **0 298 245 B1**

(12) **EUROPÄISCHE PATENTSCHRIFT**

(45) Veröffentlichungstag der Patentschrift: **25.09.91**

(51) Int. Cl.⁵: **F16F 9/36**, F16F 9/06

(21) Anmeldenummer: **88108574.0**

(22) Anmeldetag: **28.05.88**

(54) **Dämpfungsvorrichtung.**

(30) Priorität: **04.07.87 DE 3722152**

(43) Veröffentlichungstag der Anmeldung:
**11.01.89 Patentblatt 89/02**

(45) Bekanntmachung des Hinweises auf die
Patenterteilung:
**25.09.91 Patentblatt 91/39**

(84) Benannte Vertragsstaaten:
**DE FR GB IT SE**

(56) Entgegenhaltungen:
**DE-A- 1 630 738      FR-A- 1 343 161**
**FR-A- 2 267 488      FR-A- 2 385 953**
**US-A- 2 544 537      US-A- 4 014 555**

(73) Patentinhaber: **ROBERT BOSCH GmbH**
**Postfach 10 60 50**
**W-7000 Stuttgart 10(DE)**

(72) Erfinder: **Breitenbacher, Jürgen, Dipl.-Ing.**
**Rosenstrasse 38**
**W-7065 Winterbach(DE)**
Erfinder: **Kühle, Walter, Dipl.-Ing.**
**Kirschenstrasse 15**
**W-7129 Neckarwestheim(DE)**

## Beschreibung

### Stand der Technik

Die Erfindung geht aus von einer Dämpfungsvorrichtung nach der Gattung des Hauptanspruchs. Bei bekannten Dämpfungsvorrichtungen treten immer dann, wenn der vorher unbewegte Dämpfer von einer axialen Last beaufschlagt wird, Kraftkomponenten in Längsrichtung auf, welche nicht aus der gewünschten, energievernichtenden Relativbewegung der Dämpferenden zueinander resultieren, sondern welche auf die Haftreibung zwischen den zueinander beweglichen Teilen des Dämpfers zurückzuführen sind. Die Teile "kleben" scheinbar aneinander und lösen sich erst, wenn die auf sie einwirkende Kraft einen bestimmten Betrag überschreitet. Ist dieser Betrag überschritten, so setzt sprunghaft eine Bewegung ein, die beteiligten Teile bewegen sich dann gleitend zueinander. Die dabei der Bewegung entgegenesetzte Gleitreibungskraft ist weit geringer als die Haftreibungskraft.

Nachteilig beim Betrieb bekannter Dämpfungsvorrichtungen ist, daß es durch den beschriebenen Einfluß der Haftreibungskraft zu Unstetigkeiten in der Kraftübertragung und damit zu einem sprunghaften Ansprechen der Dämpfungsvorrichtung auf äußere Kräfte kommt, was, insbesondere bei Verwendung der Dämpfungsvorrichtung in einem Fahrzeug, zu Einbußen am Fahrkomfort führen kann.

Diese Nachteile machen sich besonders bei solchen Dämpfern bemerkbar, welche mit einem hohen Innendruck arbeiten, da in einem solchen Fall an die Abdichtung der Kolbenstange eine hohe Anforderung gestellt wird, die sich nur durch einen hohen Anpreßdruck der Dichtung erfüllen läßt. Damit einher gehen jedoch eine große Haft- und Gleitreibung an der Abdichtung.

In der FR-A-2 267 488 ist bereits ein Stoßdämpfer gezeigt, bei dem bei Bewegung der Kolbenstange zwischen der Kolbenstange und einem Führungskörper Dämpfungsfluid hindurchströmen kann. Dies kann unter günstigen Umständen zu einer Reibungsminderung zwischen der Kolbenstange und dem Führungskörper führen. Jedoch insbesondere bei stillstehender Kolbenstange ergibt sich bei dem bekannten Stoßdämpfer eine sehr unangenehme Haftreibungskraft. Darüberhinaus wirkt der in einem Ausgleichsraum herrschende Druck auf eine die Kolbenstange nach außen hin abdichtende Dichtung. Da in dem Ausgleichsraum teilweise erhebliche Drücke herrschen, führt dies zu zusätzlicher Reibung zwischen dem Führungskörper und der Kolbenstange. Die FR-A-2 385 953 zeigt einen ähnlichen Stoßdämpfer mit den gleichen Problemen.

Aufgabe der Erfindung ist es, einen Stoßdämpfer zu schaffen, der deutlich geringere Reibkräfte aufweist als die bekannten Stoßdämpfer.

### Vorteile der Erfindung

Die erfindungsgemäße Dämpfungsvorrichtung mit den kennzeichnenden Merkmalen des Hauptanspruchs hat demgegenüber den Vorteil, daß sie ohne Haftreibungseinfluß an der Kolbenstange arbeitet und damit ihre Dämpfungswirkung sehr weich einsetzt. Sie kann immer dann zur Anwendung kommen, wenn höchste Ansprüche an den Dämpfungskomfort gestellt werden, beispielsweise bei der Verwendung in Kraftfahrzeugen der gehobenen Preisklasse.

Die Dämpfungsvorrichtung kann mit einem sehr hohen Innendruck betrieben werden, ohne daß die bei herkömmlichen Vorrichtungen notwendigen starken, reibungspehafteten Abdichtungen erforderlich werden.

### Zeichnung

Zwei Ausführungsbeispiele der Erfindung sind in der Zeichnung vereinfacht dargestellt und werden in der nachfolgenden Beschreibung näher erläutert.

### Beschreibung des Ausführungsbeispieles

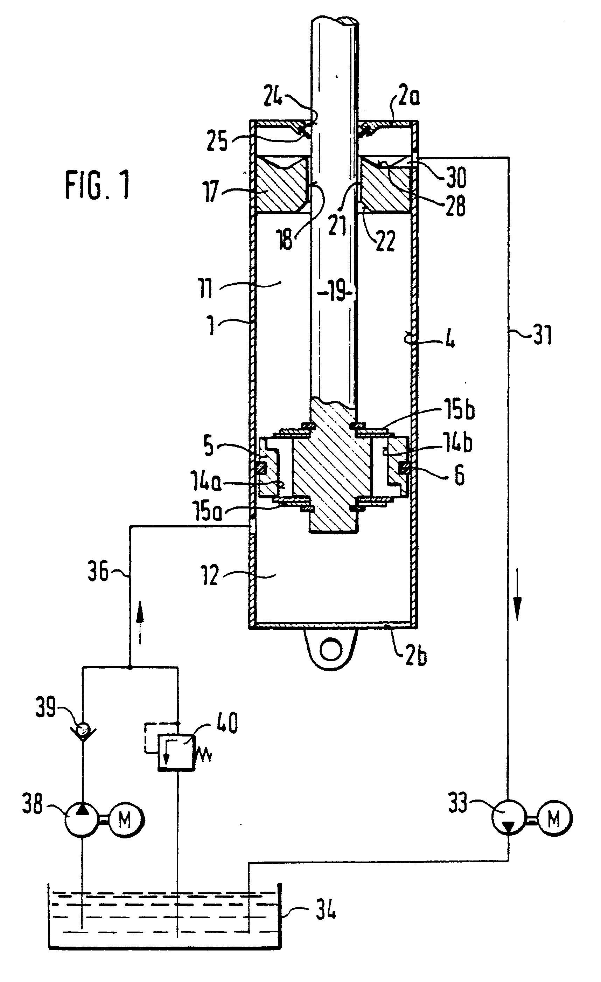

Die in Figur 1 dargestellte, in erster Linie aus einem Einrohr-Stoßdämpfer bestehende Dämpfungsvorrichtung, welche beispielsweise in einem Fahrzeug Verwendung finden kann, weist ein Mantelrohr 1 auf, welches an jeder seiner Stirnseiten mit einer Kappe 2a, 2b verschlossen ist. In einem von dem Mantelrohr 1 umschlossenen Innenraum 4 des Mantelrohres 1 befindet sich ein Dämpfungskolben 5, welcher unter Zwischenlage eines Kolbenringes 6 mit geringem Reibungswiderstand an der inneren Mantelfläche des Mantelrohres 1 axial gleiten kann. Der Dämpfungskolben 5 unterteilt den Innenraum 4 des Mantelrohres 1 in einen ersten Arbeitsraum 11 und einen zweiten Arbeitsraum 12. Erster Arbeitsraum 11 und zweiter Arbeitsraum 12 sind durch Überströmöffnungen 14a, b miteinander verbindbar. Tellerförmige Rückschlagventile 15a, b gestatten eine Durchströmung der Überströmöffnungen 14a, b nur in jeweils einer Richtung.

Dem Dämpfungskolben 5 abgewendet wird der erste Arbeitsraum 11 durch einen etwa ringförmigen Führungskörper 17 abgeschlossen, welcher in der inneren Mantelfläche des Mantelrohres 1 befestigt ist oder auch Teil desselben sein kann. Der Führungskörper 17 weist eine runde, koaxial verlaufende Öffnung 18 auf, durch welche eine fest mit dem Dämpfungskolben 5 verbundene Kolbenstange 19 axial ragt. Die Durchmesser von Kolbenstange 19 und Öffnung 18 sind so aufeinander abgestimmt, daß zwischen ihnen ein Ringspalt 21 definierter Dicke besteht. Der dem ersten Arbeitsraum 11 zugewandte Bereich der Öffnung 18 ist als Erweiterung 22 ausgebildet, beispielsweise in Form eines Konus oder einer Rundung. Wie später noch dargelegt werden wird, entspricht die Öffnung 18 des Führungskörpers 17 der Lagerschale eines hydrostatischen Gleitlagers.

Die den Abschluß des Mantelrohres 1 bildende Kappe 2a weist eine zentrale Bohrung 24 auf, durch welche die Kolbenstange 19 ragt. In der zentralen Bohrung 24 stützt sich ein ringförmiger, elastischer Abstreifer 25 ab, welcher andererseits auf der Mantelfläche der Kolbenstange 19 gleiten kann.

Die der Kappe 2a zugewandten Stirnseite des Führungskörpers 17 ist mit einer Auffangrinne 28, beispielsweise in Form einer ringförmigen Senke, versehen. An der tiefstgelegenen Stelle der Auffangrinne 28 mündet ein Abfluß 30, an den eine Rückströmleitung 31 angeschlossen ist. Die Rückströmleitung 31, welche mit einer Förderpumpe 33 versehen sein kann, führt in einen Sammelbehälter 34. Über eine Druckpumpe 38 kann Flüssigkeit aus dem Sammelbehälter 34 entnommen und über eine Zuströmleitung 36 dem zweiten Arbeitsraum 12 unter Druck zugeführt werden. Ein Rückschlagventil 39 in Reihe zur Druckpumpe 38 gestattet eine Durchströmung nur in Richtung auf den zweiten Arbeitsraum 12. Parallel zur Druckpumpe 38 ist zwischen dem zweiten Arbeitsraum 12 und dem Sammelbehälter 34 ein Druckbegrenzungsventil 40 geschaltet, welches in Abhängigkeit von Druck im zweiten Arbeitsraum 12 öffnet, wobei überschüssiges Fluid zurück in den Sammelbehälter 34 gelangt.

Die Vorrichtung arbeitet in den folgenden Weise:

Von der Druckpumpe 38 wird über die Zuströmleitung 36 Dämpfungsfluid in den zweiten Arbeitsraum 12 (wie in Figure 1 dargestellt) oder in den ersten Arbeitsraum 11 gefördert, wodurch im Innenraum 4 des Mantelrohres 1 der Vorrichtung ein bestimmtes Druckniveau erzeugt wird. Überschüssiger Druck wird durch Betätigung des Druckbegrenzungsventils 40 abgelassen. Erfindungsgemäß ist die Größe des Ringspalts 21 zwischen Kolbenstange 19 und Öffnung 18 bemessen, daß Dämpfungsfluid entlang des Ringspaltes 21 unter Druckabfall aus dem ersten Arbeitsraum 11 abströmt und sich in der Auffangrinne 28 sammelt. Das unter hohem Druckabfall durch den Ringspalt 21 nach außen abströmende Dämpfungsfluid bewirkt aufgrund hydrostatischer Kräfte eine Zentrierung und damit Lagerung der Kolbenstange 19 innerhalb der Öffnung 18 des Führungskörpers 17. Der auf der Mantelfläche der Kolbenstange 19 gebildete Flüssigkeitsfilm wird beim Ausfahren der Kolbenstange 19 durch den mit flexiblen Lippen versehenen Abstreifer 25 abgestreift und gelangt ebenfalls in die Auffangrinne 28. Das sich in der Auffangrinne 28 sammelnde Dämpfungsfluid gelangt über den Abfluß 30, entweder unter der einwirkung der Schwerkraft oder unter Zuhilfenahme der Förderpumpe 33, zum Sammelbehälter 34 zurück.

Durch die hydrostatische Geleitlagerung der Kolbenstange 19 in der Öffnung 18 des Führungskörpers 17 arbeitet die erfindungsgemäße Dämpfungsvorrichtung in diesem Bereich ohne jede Festkörperreibung. Dieser Vorteil wird auch nicht durch die Führung des Dämpfungskolbens 5 im Mantelrohr 1 oder das Gleiten des Abstreifers 25 auf der Kolbenstange 19 gemindert, da die dabei auftrenden Reibwiderstände nur sehr gering sind.

Selbstverständlich ist es nicht notwendig, daß die Zuströmleitung 36, wei in Figur 1 dargestellt, in den zweiten Arbeitsraum 12 mündet. Ebenso gut kann die Druckpumpe 38 in den ersten Arbeitsraum 11 fördern.

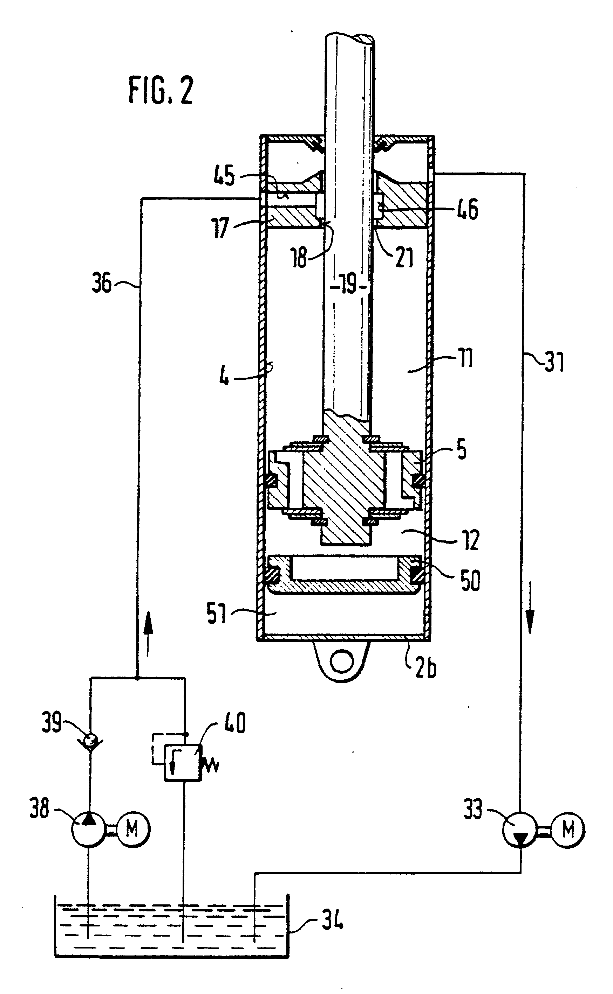

Eine andere Art der Zuführung des unter Druck stehenden Dämpfungsfluids zeigt das in Figur 2 dargestellte Ausführungsbeispiel der Erfindung. Gleichwirkende Bauteile sind hierbei mit den gleichen Bezugszeichen versehen. Die Zuströmleitung 36 mündet hierbei in eine radial im Führungskörper 17 verlaufende Zuführbohrung 45, welche sich andererseits in eine Schmiermitteltasche 46 öffnet. die Schmiermitteltasche 46 weist die Form einer radial in der Öffnung 18 des Führungskörpers 17 eingearbeiteten, ringförmigen, flachen Nut auf. Die Schmiermitteltasche 46 dient der guten Verteilung des über die Zuführbohrung 45 unter Druck zuströmenden Schmiermittels, d.h. im vorliegenden Fall Dömpfungsfluids, über dem Umfang der Öffnung 18. In der Schmiermitteltasche 46 herrscht also der Druck, den die Druckpumpe 38 und das Druckbegrenzungsventil 40 aufrecht erhalten. Aus der Schmiermitteltasche 46 strömt das Dämpfungsfluid entlang des Ringspaltes 21 einerseits in den ersten Arbeitsraum 11 und andererseits in bereits beschriebener Weise nach außen. Im Gegensatz zum ersten Ausführungsbeispiel, bei dem nur eine Spaltströmung vom ersten Arbeitsraum 11 nach außen besteht, teilt die Schmiermitteltasche 46 das zuströmende Dämpfungsfluid in einen zum ersten Arbeitsraum 11 und einen nach außen strömenden Anteil auf. Durch den hohen Gegendruck im ersten Arbeitsraum 11 strömt jedoch der größte Teil des in die Schmiermitteltasche 46 gelangenden Dämpfungsfluids unter Druckabfall entlang des nach außen führenden Abschnitts des Ringspalts 21. Der zwischen Schmiermitteltasche 46 und erstem Arbeitsraum 11 gelegene Abschnitt des Ringspalts 21 bildet eine Drosselstelle, durch welche verhindert wird, daß die bei Betätigung der Dämpfungsvorrichtung auftretenden Druckamplituden im ersten Arbeitsraum 11 sich unmittelbar auf den Druck in der Schmiermitteltasche 46 auswirken. Dies wäre von nachteil für die von Druckgefälle zwischen Schmiermitteltasche 46 und Außenraum abhängige Qualität der hydrostatischen Gleitlagerung.

Der der Kappe 2b benachbarte Teil des zweiten Arbeitsraumes 12 kann von einem von einer beweglichen Trennwand 50 abgeschlossenen Gaspolster 51 eingenommen werden. Dieses Gaspolster, welches bei herkömmlichen Einrohr-Stoßdämpfern obligatorisch ist, kann bei der erfindungsgemäßen Dämpfungsvorrichtung auch wegfallen, da die Vorrichtung ein offenes System bildet und Druckpumpe 38 soie Druckbegrenzungsventil 40 zur Kompensation des ein- und ausfahrenden Kolbenstangenvolumens herangezogen werden können.

**Patentansprüche**

1. Dämpfungsvorrichtung mit einem mit Dämpfungsfluid gefüllten Mantelrohr (1), einem innerhalb des Mantelrohres axial beweglichen, zwei durch Überströmöffnungen miteinander in Verbindung stehende Arbeitsräume (11, 12) unterteilenden Dämpfungskolben (5) sowie mit einer mit dem Dämpfungskolben verbundenen, stirnseitig aus einer Öffnung (18) eines Führungskörpers (17) herausragenden und in dieser geführten Kolbenstange (19), mit einem Ringspalt (21) zwischen der Öffnung (18) und der Kolbenstange (19), über den Dämpfungsfluid unter Druckabfall in einen Sammel behälter (34) abströmen kann, gekennzeichnet durch einen Kreislauf (31, 34, 36), über den mindestens ein Teil des über den Ringspalt (21) abströmenden Dämpfungsfluids mittels einer Druckpumpe (38) wieder in einen der Arbeitsräume (11, 12) gefördert wird.

2. Dämpfungsvorrichtung nach Anspruch 1, dadurch gekennzeichnet, daß die Öffnung (18) als Lagerschale eines hydrostatischen Gleitlagers ausgeführt ist.

3. Dämpfungsvorrichtung nach Anspruch 2, dadurch gekennzeichnet, daß das unter Druck geförderte Dämpfungsfluid direkt einem der Arbeitsräume (11, 12) zugeführt wird.

4. Dämpfungsvorrichtung nach Anspruch 2, dadurch gekennzeichnet, daß das unter Druck geförderte Dämpfungsfluid direkt einer Schmiermitteltasche (46) in der Öffnung (18) zugeführt wird.

5. Dämpfungsvorrichtung nach Anspruch 1, gekennzeichnet durch eine die Kolbenstange (19) umgebende Auffangrinne (28), in welcher sich das über den Ringspalt (21) nach außen abströmende Dämpfungsfluid sammelt.

6. Dämpfungsvorrichtung nach Anspruch 5, gekennzeichnet durch einen fest eingebauten Abstreifer (25), welcher oberhalb des Ringspaltes (21) auf der Kolbenstange (19) gleitet.

**Claims**

1. Damping device having an outer tube (1) filled with damping fluid, a damping piston (5) which is axially movable within the outer tube and divides two working spaces (11,12) connected to one another by means of overflow orifices, as well as having a piston rod (19) which is connected to the damping piston, protrudes at the end out of an orifice (18) of a guiding body (17) and is guided therein, having an annular gap (21) between the orifice (18) and the piston rod (19) via which damping fluid can flow off into a receiver container (34) with a drop in pressure, characterised by a circuit (31,34,36) via which at least a portion of the damping fluid flowing off via the annular gap (21) can be delivered back into one of the working spaces (11,12) by means of a pressure pump (38).

2. Damping device according to Claim 1, characterised in that the orifice (18) is constructed as a bearing shell of a hydrostatic sliding bearing.

3. Damping device according to Claim 2, characterised in that the damping fluid delivered under pressure is fed directly to one of the working spaces (11,12).

4. Damping device according to Claim 2, characterised in that the damping fluid delivered under pressure is fed directly to a lubricant bag (46) in the orifice (18).

5. Damping device according to Claim 1, characterised by a collecting channel (28) which surrounds the piston rod (19) and in which the damping fluid flowing off towards the outside via the annular gap (21) collects.

6. Damping device according to Claim 5, characterised by a permanently installed stripping device (25) which slides above the annular gap (21) on the piston rod (19).

**Revendications**

1. Dispositif d'amortissement comprenant un tube enveloppe (1) rempli de fluide d'amortissement, un piston d'amortissement (5) mobile axialement à l'intérieur du tube enveloppe, déterminant deux compartiments de travail se trouvant en communication l'un avec l'autre par des ouvertures de décharge ainsi qu'une tige de piston (19) liée au piston d'amortissement sortant frontalement d'une ouverture (18) d'un corps de guidage (17) et guidée dans ce dernier, avec un intervalle annulaire (21) entre l'ouverture (18) et la tige de piston (19) par lequel peut s'écouler du liquide d'amortissement sous chute de pression dans un récipient collecteur (34), caractérisé par un circuit (31, 34, 36), au moyen duquel au moins une partie du liquide d'amortissement s'écoulant par l'intervalle annulaire (21) est envoyée à nouveau par une pompe de refoulement dans un des espaces de travail (11,12).

2. Dispositif d'amortissement selon la revendication 1, caractérisé en ce que l'ouverture (18) est réalisée comme coquille de coussinet d'un palier à glissement hydrostatique.

3. Dispositif d'amortissement selon la revendication 2, caractérisé en ce que le fluide d'amortissement envoyé sous pression est amené directement à un des espaces de travail (11, 12).

4. Dispositif d'amortissement selon la revendication 2, caractérisé en ce que le fluide d'amortissement envoyé sous pression est alimenté directement à une poche de lubrifiant (46) dans ouverture (18).

5. Dispositif d'amortissement selon la revendication 1, caractérisé par une goulotte réceptrice (28) entourant la tige de piston (19), dans laquelle se recueille le fluide d'amortissement s'écoulant par l'intervalle annulaire (21) vers l'extérieur.

6. Dispositif d'amortissement selon la revendication 5, caractérisé par un racleur (25) monté fixe, au-dessus de l'intervalle annulaire (21) et qui glisse sur la tige de piston (19).

FIG. 1

FIG. 2